# EUROPÄISCHE PATENTSCHRIFT

(11) **EP 2 163 417 B1**
(45) Veröffentlichungstag und Bekanntmachung des Hinweises auf die Patenterteilung: **16.05.2012**
(21) Anmeldenummer: 09011242.6
(22) Anmeldetag: 02.09.2009
(51) Int. Cl.: B60J 7/10

(54) **Spannvorrichtung für die Ladeplane eines Nutzfahrzeugaufbaus**
Fastening device for the side curtain of a truck vehicle
Mécanisme de fixation d'une bâche pour véhicules de transport

(30) Priorität: 16.09.2008 DE 102008047287
(43) Veröffentlichungstag der Anmeldung: 17.03.2010
(73) Patentinhaber: Fahrzeugwerk Bernard Krone GmbH, 48480 Spelle (DE)
(72) Erfinder: Perk, Thorsten, 26901 Lorup (DE)
(74) Vertreter: Pott, Ulrich

(56) Entgegenhaltungen:
- EP-A- 0 738 621
- EP-A- 1 254 801
- WO-A-2006/089347
- WO-A-2008/138059
- GB-A- 2 447 031

## Beschreibung

Die Erfindung bezieht sich auf einen Nutzfahrzeugaufbau mit einem Chassis sowie mit zumindest einer beweglichen Seitenplane zur Begrenzung eines Laderaumes in einer Ausbildung gemäß dem Oberbegriff des Patentanspruches 1.

Nutzfahrzeugaufbauten mit Spannvorrichtungen sind bekannt, um Seitenplanen von Nutzfahrzeugen mit dem Boden eines Nutzfahrzeugaufbaus zu verspannen. Für einen Beladungs- bzw. Entladungsvorgang eines derartigen Nutzfahrzeuges sind die Verzurrmittel bzw. Spannseile zu lösen, um die Seitenplane öffnen zu können. Wesentlich ist, dass in die Seitenplanen mittels der Verzurrmittel und/oder der Spannseile eine hinreichende Spannkraft in vertikaler Richtung eingebracht werden kann, um während einer Arbeitsfahrt eines Nutzfahrzeuges Seitenplanenbewegungen möglichst zu vermeiden.

Aus der W02006/089347 ist ein Nutzfahrzeugaufbau mit einer Spannvorrichtung bekannt, bei der die Verzurrmittel endseitig mit einem Verzurrhaken verbunden sind, in den ein Spannelement in Gestalt eines Schwenkriegels eingreift und im Verlaufe der Überführung des Schwenkriegels in die Spannendstellung mittels eines Pneumatikzylinders den Verzurrhaken nach unten bewegt. In dieser Stellung ist das Verzurrmittel gespannt und wird durch den Pneumatikzylinder in der Spannendstellung gehalten. Nachteilig ist, dass das Spannelement in seiner Spannendstellung über die Außenfläche eines Nutzfahrzeugaufbaus hinausragt, was sich ungünstig auf den Luftwiderstand des Fahrzeuges und damit auch auf die Fahrgeräusche und den Kraftstoffverbrauch auswirkt.

Aus der gattungsgemäßen EP 0 738 621 ist ein Nutzfahrzeug bekannt, bei dem unterhalb des Nutzfahrzeugaufbaus ein Gehäuse einer Spannvorrichtung angeordnet ist mit einem von einer Antriebseinheit aus einer Spannausgangsstellung in eine Spannendstellung überführbaren, mit einem Verzurrmittel bzw. einem Spannseil verbindbaren Spannelement. Das Spannelement ist aus einer Spannausgangsstellung von der Antriebseinheit entlang einer gehäuseseitigen Führung in das Gehäuse hinein in die Spannendstellung bewegbar. Das Spannelement ist dabei lediglich in der Lage, eine translatorische Bewegung durchzuführen. Das Spannelement ist dabei nicht in einer gehäuseseitigen Kulisse geführt, was die Bewegung des Spannelementes behindert.

Aus der WO 2008/138059, die nicht vorveröffentlicht ist, ist ein Nutzfahrzeugaufbau der eingangs genannten Art bekannt. Dieser Nutzfahrzeugaufbau weist eine Kulissenführung mit einem zunächst geradlinigen und dann leicht geschwungenen Bereich auf. Es ist Aufgabe der vorliegenden Erfindung, einen Nutzfahrzeugaufbau der eingangs genannten Art mit einer Spannvorrichtung mit verbesserten Eigenschaften zur Verfügung zu stellen, bei der durch eine kombinierte translatorische Bewegung mit einer Schwenkbewegung mit einem verminderten Aufwand die Spannendstellung eingenommen werden kann.

Zur Lösung dieser Aufgabe zeichnet sich der Nutzfahrzeugaufbau durch die im Patentanspruch 1 angegebenen Merkmale aus. Hinsichtlich wesentlicher vorteilhafter Ausgestaltungen wird auf die Patentansprüche 2 bis 6 verwiesen.

Damit ist ein Nutzfahrzeugaufbau in einer Spannvorrichtung geschaffen, bei der sich das Spannelement in seiner Spannendstellung, in der sich die Spannkräfte in die Plane eingeleitet hat, innerhalb des Gehäuses befindet, so dass es nicht nach außen ragt und einen Luftwiderstand ungünstig beeinflusst. Da das Gehäuse unterhalb des Nutzfahrzeugs angebaut ist, befindet sich das Spannelement mithin noch insgesamt unterhalb des Nutzfahrzeugaufbaus, und zwar mitsamt dem an diesem gehaltenen Verzurrelement bzw. Spannseil. Das Spannelement ist in einer gehäuseseitigen Kulissenführung bewegbar, die nach Art eines "L" gestaltet ist und im Seitenaußenbereich nach unten weist. Somit kann das Spannelement in eine Spannausgangsstellung gebracht werden, in der es durch die nach unten hin abgerundete Kulissenführung in eine nach unten, aber mit einem nach oben weisenden Spannhaken gebracht ist, so dass es bei der Bewegung entlang der Kulissenführung in die Spannendstellung eine Schwenkbewegung im Uhrzeigersinn durchmacht und dabei ein Spannseil bzw. ein Verzurrmittel einfangen kann. Im Verlaufe seiner weiteren Bewegung in die Spannendstellung wird das Spannelement in das Gehäuse hinein geführt, und zwar unter Mitnahme des zuvor eingefangenen Verzurrmittels bzw. Spannseils.

Bevorzugtermaßen kann der Antrieb als Pneumatik- oder Hydraulikzylindereinheit ausgebildet sind, so dass der Vorgang automatisiert durchzuführen ist. Es ist ebenfalls möglich, bei geeigneter Ausbildung der Verzurrmittel bzw. der Spannseile die Spannvorrichtung als zentrale Spannvorrichtung für jede Seite des Nutzfahrzeugaufbaus vorzusehen, so dass ein Nutzfahrzeugaufbau mit nur einer Spannvorrichtung pro Nutzfahrzeugseite auskommen kann.

Hinsichtlich wesentlicher weiterer Ausgestaltungen wird auf weitere Unteransprüche, die nachfolgende Beschreibung und die Zeichnung verwiesen. In der Zeichnung zeigen:
- Fig. 1: in einer perspektivischen Darstellung ein Ausführungsbeispiel eines Nutzfahrzeugaufbaus mit einem Ausführungsbeispiel ei- ner zentralen Spannvorrichtung nach der Erfindung;
- Fig. 2: ausschnittsweise vergrößert das Ausführungsbeispiel der Spannvorrichtung nach Fig. 1;
- Fig. 3: vergrößert die Einzelheit "B" in Fig. 2;
- Fig. 4: perspektivisch das Ausführungsbeispiel einer Spannvorrich- tung nach der Erfindung in der Spannausgangsstellung des Spannelementes;
- Fig. 5: die Spannvorrichtung nach Fig. 4 im Verlaufe der Bewegung des Spannelementes in die Spannendstellung, und
- Fig. 6: die Spannvorrichtung nach den Fig. 4 und 5 kurz vor Erreichen der Spannendstellung des Spannelementes.

In der Zeichnung sind allgemein übereinstimmende Teile mit übereinstimmenden Bezugsziffern versehen.

In der Zeichnung ist mit 1 ein Nutzfahrzeugaufbau beziffert, der ein Chassis 2, Räder 3 sowie eine Seitenplane 4 neben einer Vorderwand 5 aufweist. Die Seitenplane 4 soll für einen Beladungs- und Entladungsvorgang seitlich wegzuschieben sein, um den Laderaum zugänglich zu machen.

Im einzelnen nicht näher ersichtlich sind Verzurrmittel und/oder Spannseile vorgesehen, um die Seitenplane 4 in vertikaler Richtung zu spannen. Dies ist bei dem gezeigten Ausführungsbeispiel so gestaltet, dass sich die Seitenplane 4 bis zum unteren Bereich des Chassis 2 erstreckt und über eine zentrale Spannvorrichtung 7 auf jeder Seite des Chassis 2 die Verzurrmittel bzw. die Spannseile zu spannen sind. Im einzelnen nicht ersichtlich sind im rückwärtigen Endbereich auf jeder Seite jeweils eine Spannrolle vorgesehen, um die Seitenplane in horizontaler Richtung zu spannen.

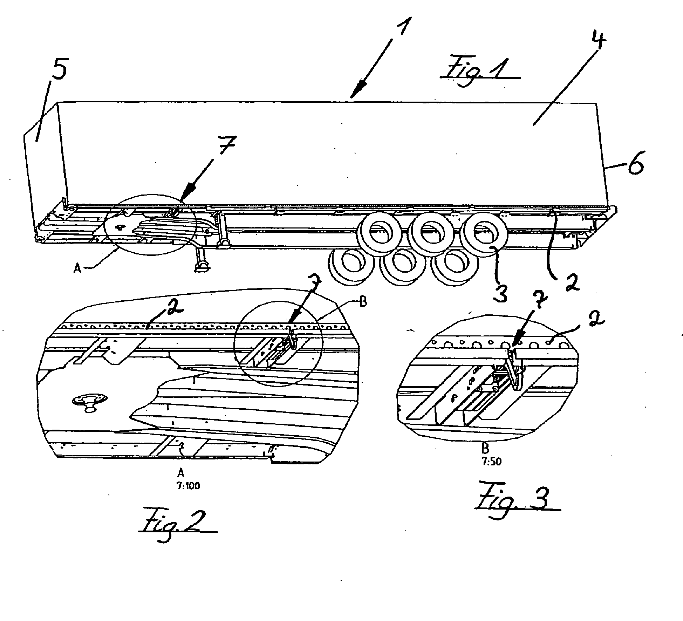

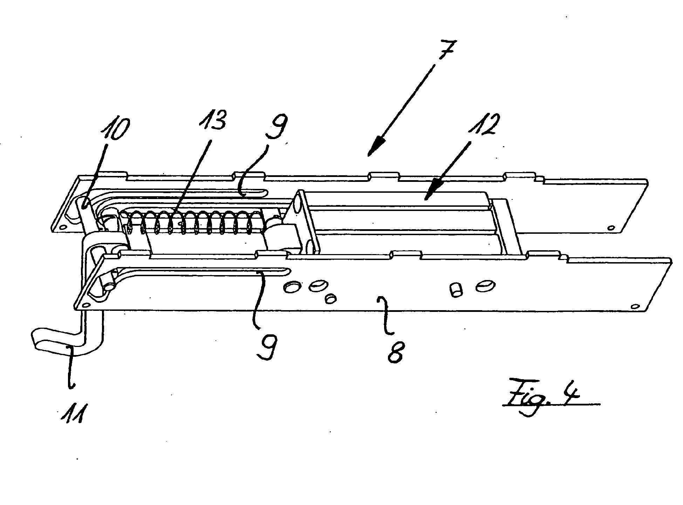

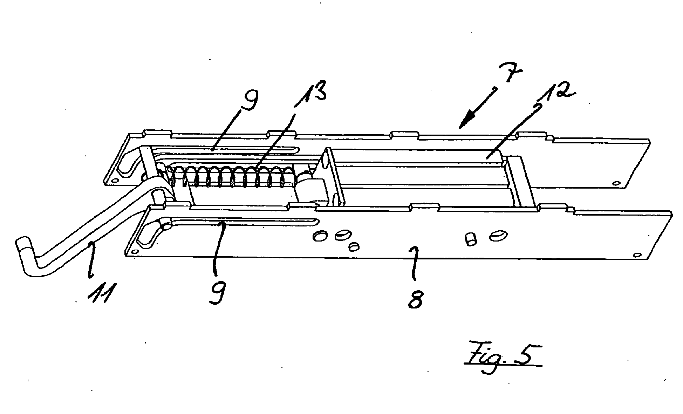

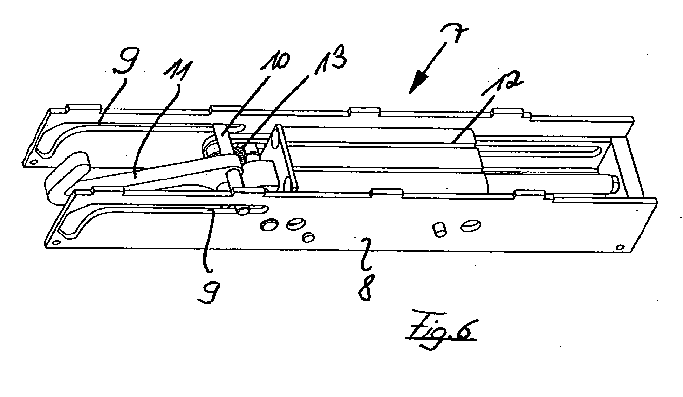

Die Spannvorrichtung 7 ist, wie näher aus den Fig. 2 und 3 hervorgeht, an der Unterseite des Nutzfahrzeugaufbaus 1 vorgesehen und weist ein Gehäuse 8 auf, in dem auf jeder Seite eine Kulisse 9 eingebracht ist. Diese Kulisse 9 hat eine im wesentlichen abgerundete L-förmige Gestalt und ist nach vorne hin gebogen und abgerundet ausgebildet. Innerhalb dieser Kulisse ist mittels eines Bolzens 10 ein Spannelement 11 in Gestalt eines Spannhakens geführt, das in Fig. 4 in seiner Spannausgangslage, in Fig. 5 im Verlaufe seiner Bewegung in die Spannendstellung und in Fig. 6 kurz vor Erreichen der Spannendstellung gezeigt ist. Durch die gebogene bzw. abgekröpfte Ausbildung der Kulisse 9 durchläuft das Spannelement 11 im Verlaufe seiner Bewegung aus der Spannausgangsstellung in die Spannendstellung eine Schwenkbewegung, in der er ein Spannseil oder ein Verzurrmittel ergreifen bzw. einfangen kann und mitnimmt. Das Spannelement 11 bewegt sich im Verlaufe dieser Spannbewegung in das Gehäuse 8 hinein, so dass es bei Erreichen der Spannendstellung innerhalb des Gehäuses 8 und damit insgesamt unterhalb des Nutzfahrzeugaufbaus 1 gelegen ist.

Als Antriebseinheit 12 ist in dem gezeigten Ausführungsbeispiel ein Pneumatikzylinder vorgesehen, der das Spannelement 11 gegen die Kraft einer Feder 13 in die Spannendstellung überführt. Durch Drucklosschalten des Pneumatikzylinders wird über die Kraft der Feder 13 das Spannelement 11 automatisch in die Spannausgangsstellung überführt. Dies ist bei dem gezeigten Ausführungsbeispiel mittels einer zentralen Auslöseeinheit zu vollziehen.

## Patentansprüche

1. Nutzfahrzeugaufbau (1) mit einem Chassis (2) sowie mit zumindest einer beweglichen Seitenplane (4) zur Begrenzung eines Laderaumes und einer Spannvorrichtung (7) zum Spannen von Verzurrmitteln und/oder Spannseilen der Plane (4) sowie mit einem in einem unterhalb des Nutzfahrzeugaufbaus angeordneten Gehäuse (8) abgestützten, von einer Antriebseinheit aus einer Spannausgangsstellung in eine Spannendstellung überführbaren, mit einem Verzurrmittel bzw. einem Spannseil verbindbaren Spannelement (11), wobei das Spannelement (11) aus seiner Spannausgangsstellung von der Antriebseinheit (12) entlang einer gehäuseseitigen Führung in das Gehäuse (8) hinein in die Spannendstellung bewegbar ist, wobei das Spannelement (11) aus seiner Spannausgangsstellung in die Spannendstellung entlang einer gehäuseseitigen Kulissenführung (9) bewegbar ist und dass das Spannelement (11) im Verlaufe seiner Bewegung aus der Spannausgangsstellung in die Spannendstellung eine kombinierte Schwenkbewegung und eine translatorische Bewegung durchführt, **dadurch gekennzeichnet, dass** die Kulisse innerhalb des Gehäuses im Wesentlichen L-förmig mit abgerundeten Übergangsbereichen ausgebildet ist.

2. Nutzfahrzeugaufbau nach Anspruch 1, **dadurch gekennzeichnet, dass** das Spannelement (11) eine Schwenkbewegung in Richtung der Unterseite eines Fahrzeugaufbaus durchführt.

3. Nutzfahrzeugaufbau nach Anspruch 1 oder 2, **dadurch gekennzeichnet, dass** das Spannelement (11) als Spannhaken mit einem zur Unterseite des Nutzfahrzeugaufbaus hin offene Spannaufnahme ausgebildet ist.

4. Nutzfahrzeugaufbau nach einem der Ansprüche 1 bis 3, **dadurch gekennzeichnet, dass** die Antriebseinheit (13) einen Pneumatik- oder Hydraulikzylinder aufweist.

5. Nutzfahrzeugaufbau nach einem der Ansprüche 1 bis 4, **dadurch gekennzeichnet, dass** das Spannelement (11) gegen die Kraft eines Kraftspeichers aus seiner Spannausgangsstellung in die Spannendstellung bewegbar ist.

6. Nutzfahrzeugaufbau nach Anspruche 5, **dadurch gekennzeichnet, dass** der Kraftspeicher als Zugfeder ausgebildet ist.

## Claims

1. Body (1) for a commercial vehicle, having a chassis (2), having at least one movable side curtain (4) for defining a load-carrying space, having a tensioning device (7) for tensioning lashing means and/or tensioning cables of the curtain (4) and having a tensioning member (11) which is supported in a housing (8) arranged below the body for a commercial vehicle, which can be transferred by a drive unit from an initial tensioning position to a final tensioning position, and which can be connected to a lashing means or a tensioning cable, the tensioning member (11) being able to be moved by the drive unit (12) from its initial tensioning position, along a guide in the housing into the housing (8) and to the final tensioning position, the tensioning member (11) being able to be moved from its initial tensioning position to the final tensioning position along a guide in the housing in the form of a guideway (9), and the tensioning member (11) performing, in the course of its movement from the initial tensioning position to the final tensioning position, a combined pivoting movement and movement in translation, **characterised in that** the guideway within the housing is of a substantially L-shaped form with rounded transitional regions.

2. Body for a commercial vehicle according to claim 1, **characterised in that** the tensioning member (11) performs a pivoting movement towards the underside of a vehicle body.

3. Body for a commercial vehicle according to claim 1 or 2, **characterised in that** the tensioning member (11) takes the form of a tensioning hook having a receptacle for tensioning which is open towards the underside of the body for a commercial vehicle.

4. Body for a commercial vehicle according to one of claims 1 to 3, **characterised in that** the drive unit (13) has a pneumatic or hydraulic cylinder.

5. Body for a commercial vehicle according to one of claims 1 to 4, **characterised in that** the tensioning member (11) can be moved from its initial tensioning position to the final tensioning position in opposition to the force from a means of storing force.

6. Body for a commercial vehicle according to claim 5, **characterised in that** the means of storing force takes the form of a tension spring.

## Revendications

1. Carrosserie de véhicule utilitaire (1) comprenant un châssis (2) et au moins une bâche latérale mobile (4) destinée à délimiter un espace de chargement et un dispositif de fixation (7) destiné à fixer des moyens d'arrimage et/ou des cordes de fixation de la bâche (4) et comprenant un élément de fixation (11) soutenu dans un boîtier (8) disposé au-dessous de la carrosserie du véhicule utilitaire, pouvant être transféré par une unité d'entraînement d'une position de départ de fixation à une position finale de fixation et pouvant être relié à un moyen d'arrimage ou à une corde de fixation, l'élément de fixation (11) pouvant être déplacé de sa position de départ de fixation par l'unité d'entraînement (12) le long d'un guidage côté boîtier à l'intérieur du boîtier (8) dans la position finale de fixation, l'élément de fixation (11) étant mobile de sa position de départ de fixation dans la position finale de fixation le long d'un guidage à coulisse (9) côté boîtier et l'élément de fixation (11) réalisant au cours de son déplacement de la position de départ de fixation à la position finale de fixation un déplacement pivotant combiné et un déplacement en translation, **caractérisée en ce que** la coulisse est réalisée sensiblement en forme de L à zones de transition arrondies à l'intérieur du boîtier.

2. Carrosserie de véhicule utilitaire selon la revendication 1, **caractérisée en ce que** l'élément de fixation (11) réalise un déplacement pivotant en direction du côté inférieur d'une carrosserie de véhicule.

3. Carrosserie de véhicule utilitaire selon la revendication 1 ou 2, **caractérisée en ce que** l'élément de fixation (11) est réalisé comme un crochet de fixation comprenant un logement de fixation ouvert en direction du côté inférieur de la carrosserie du véhicule utilitaire.

4. Carrosserie de véhicule utilitaire selon l'une quelconque des revendications 1 à 3, **caractérisée en ce que** l'unité d'entraînement (13) comprend un cylindre pneumatique ou hydraulique.

5. Carrosserie de véhicule utilitaire selon l'une quelconque des revendications 1 à 4, **caractérisée en ce que** l'élément de fixation (11) est mobile de sa position de départ de fixation à la position finale de fixation à l'encontre de la force d'un accumulateur d'énergie.

6. Carrosserie de véhicule utilitaire selon la revendication 5, **caractérisée en ce que** l'accumulateur d'énergie est réalisé comme un ressort de traction.
